# EUROPÄISCHE PATENTSCHRIFT

(11) **EP 0 612 418 B1**
(45) Veröffentlichungstag und Bekanntmachung des Hinweises auf die Patenterteilung: **04.06.1997**
(21) Anmeldenummer: 93919321.5
(22) Anmeldetag: 12.09.1993
(51) Int. Cl.: G03B 27/32

(54) **FOTOGRAFISCHES VERGRÖSSERUNGSGERÄT**
PHOTOGRAPHIC ENLARGING APPARATUS
AGRANDISSEUR PHOTOGRAPHIQUE

(30) Priorität: 15.09.1992 IT BZ920005 U
(43) Veröffentlichungstag der Anmeldung: 31.08.1994
(73) Patentinhaber: DURST PHOTOTECHNIK A.G., 39042 Brixen (IT)
(72) Erfinder: TASSER, Siegfried, I-39042 Brixen (IT)
(86) Internationale Anmeldenummer: EP9302460
(87) Internationale Veröffentlichungsnummer: WO9407181

(56) Entgegenhaltungen:
- CH-A- 319 966
- DE-C- 831 354
- FR-A- 880 158
- FR-A- 885 158

## Beschreibung

### Technisches Gebiet

Die vorliegende Erfindung bezieht sich allgemein auf Vorrichtungen zur Herstellung fotografischer Abzüge oder Vergrößerungen von einem Filmoriginal. Insbesondere betrifft die Erfindung ein fotografisches Vergrößerungsgerät, das vorwiegend für den Bereich Amateurfotografie bestimmt ist.

### Stand der Technik

Vergrößerungsgeräte für die Dunkelkammer eines Fotoamateurs haben angesichts der besonderen Gegebenheiten besonderen Erfordernissen zu genügen. Ein ständiges Problem des Fotoamateurs ist die Beschränktheit des verfügbaren Raumes für die Unterbringung des Vergrößerungsgerätes und der anderen Dunkelkammereinrichtungen. Der Fotoamateur verfügt nämlich in der Regel nicht über einen ständig als Dunkelkammer eingerichteten Raum, sondern ist gezwungen, fallweise einen anderweitig benutzten Raum zur Dunkelkammer umzurüsten. Zum Erfordernis des minimalen Raumbedarfs des Vergrößerungsgerätes im Betrieb kommt also noch jenes der leichten Montage und Demontage des Gerätes und der raumsparenden Verstaubarkeit der abgelegten Geräteteile hinzu.

Bislang bekannt gewordene Geräte der genannten Art bieten keine angemessene Lösung für die angeführten Probleme. In bekannten Vergrößerungsgeräten ist ein Projektionskopf an einer Tragsäule höhenverstellbar gehalten, und die Säule ist mit einem Grundbrett verschraubt, das zugleich den Projektionstisch bildet. Das Grundbrett als Projektionstisch muß in seinen Ausmaßen dem vorgesehenen Bildformat entsprechen und außerdem genügend robust sein, um eine ausreichende Standfestigkeit des Ganzen sicherzustellen. Dies bringt für das komplette Vergrößerungsgerät notgedrungen relativ große Abmessungen sowohl im Grundriß als auch in der Höhe mit sich, was Raumprobleme bereits für das Vergrößerungsgerät im Betrieb ergeben kann. Nicht weniger unbefriedigend ist ein solcher Geräteaufbau, wenn eine Demontage des Gerätes und die Verstauung der Geräteteile notwendig ist. Die Montage und Demontage ist bei bekannten Vergrößerungsgeräten relativ mühsam und zeitaufwendig und erfordert meist geeignete Werkzeuge und ein gewisses handwerkliches Können.

### Offenbarung der Erfindung

Der Erfindung liegt die Aufgabe zugrunde, ein Vergrößerungsgerät mit geringem Raumbedarf zu schaffen, dessen Leistung qualitativ den Erfordernissen des Fotoamateurs genügt und darüber hinaus eine leichte Montage und Demontage am Arbeitsplatz und eine raumsparende Verstauung der Geräteteile bei Nichtbenutzung zuläßt.

Das erfindungsgemäße Vergrößerungsgerät, das diese Aufgabe erfüllt, ist im Anspruch 1 definiert. Bei diesem Gerät weist die Säule geeignete Mittel zu ihrer lösbaren Befestigung an einem ortsfesten Träger auf, und der Projektionskopf ist in fester Position an einem Säulenende abnehmbar befestigt, während der Projektionstisch an der Säule in einer diskreten Anzahl vorgegebener Positionen mit unterschiedlichem Abstand vom Projektionskopf ansetzbar ist.

Dadurch, daß die Säule eigenständig an einer entsprechenden externen Stützvorrichtung befestigbar ist, hat der Projektionstisch nicht länger die Funktion eines Grundbrettes als Basis für die Säule und den Projektionskopf. Somit ergeben sich neue Dimensionierungskriterien zugunsten einer Verringerung des Gewichtes und der Sperrigkeit. Die erfingungsgemäße Anordnung ermöglicht es außerdem, den Vergrößerungsmaßstab nicht wie üblich durch Verstellen des Projektionskopfes, sondern durch Versetzen des Projektionstisches längs der Säule einzustellen. Dadurch erübrigen sich Verstellvorrichtungen für den Projektionskopf, was den Vorteil einer besonders einfachen und kostengünstigen Konstruktion neben einer leichten Bedienung des Gerätes mit sich bringt.

Die Erfindung sieht für die Säule eine Klemmfixierung vor, die ein rasches Fixieren der Säule an einer beliebigen Tisch- oder Arbeitsplatte oder an einer sonstigen im Arbeitsraum vorhandenen Auflage gestattet. Der Projektionskopf weist einen mit dem Säulenende formschlüssigen Hals auf und ist durch einfaches Ineinanderfügen der formschlüssigen Teile mit der Säule verbindbar. Bei einer bevorzugten Ausführungsform weist der Projektionstisch Anschlußelemente auf, die im Zusammenwirken mit komplementären Vorrichtungen der Säule die schnelle Befestigung des Tisches an der Säule in vorgegebenen Positionen erlauben. Die verschiedenen Positionen längs der Säule sind vorzugsweise unterschiedlichen Standardbildformaten zugeordnet. Vorteilhafterweise ist an der Säule eine Formatskala angebracht und dieser eine weitere Skala zugeordnet, an welcher der Verlängerungsfaktor (Verkürzungsfaktor) für die Belichtungszeit aufgrund der geänderten Vergrößerung beim Wechsel von einem Format zum anderen ablesbar ist.

Gemäß einer weiteren Ausbildung des erfindungsgemäßen Gerätes ist der Projektionstisch für die Ausstattung mit Zusatzvorrichtungen wie Kopierrahmen, Maskenrahmen, Kontaktkopierrahmen und dergleichen eingerichtet.

Als Vergrößerungsobjektiv wird vorzugsweise ein Weitwinkelobjektiv, typisch ein Objektiv mit einer Brennweite von 38 mm eingesetzt. Dies ergibt kürzere Abstände zwischen Objektiv und Projektionsebene bei gleicher maximaler Vergrößerung und letztendlich eine geringere Höhe des Vergrößerungsgerätes selbst.

Weitere Einzelheiten und Vorteile der Erfindung ergeben sich aus der nachfolgenden Beschreibung eines bevorzugten Ausführungsbeispiels und den beigefügten Zeichnungen.

### Kurze Beschreibung der Zeichungen

- Fig. 1: ist eine Seitenansicht des erfindungsgemäßen Vergrößerungsgerätes;
- Fig. 2: ist eine Teilansicht zur Verdeutlichung der Verbindung des Projektionskopfes mit der Säule;
- Fig. 3: ist eine Vorderansicht der Säule;
- Fig. 4: ist eine Schnittansicht der Säule zur Verdeutlichung der Befestigung des Projektionstisches an der Säule;
- Fig. 5: ist eine Teilansicht der Säule mit Beschriftung;
- Fig. 6: ist eine Seitenansicht des Projektionstisches mit einer Ausrüstung zum Kontaktkopieren, und
- Fig. 7: ist eine Draufsicht auf den Projektionstisch nach Fig. 6.

### Bester Weg zur Ausführung der Erfindung

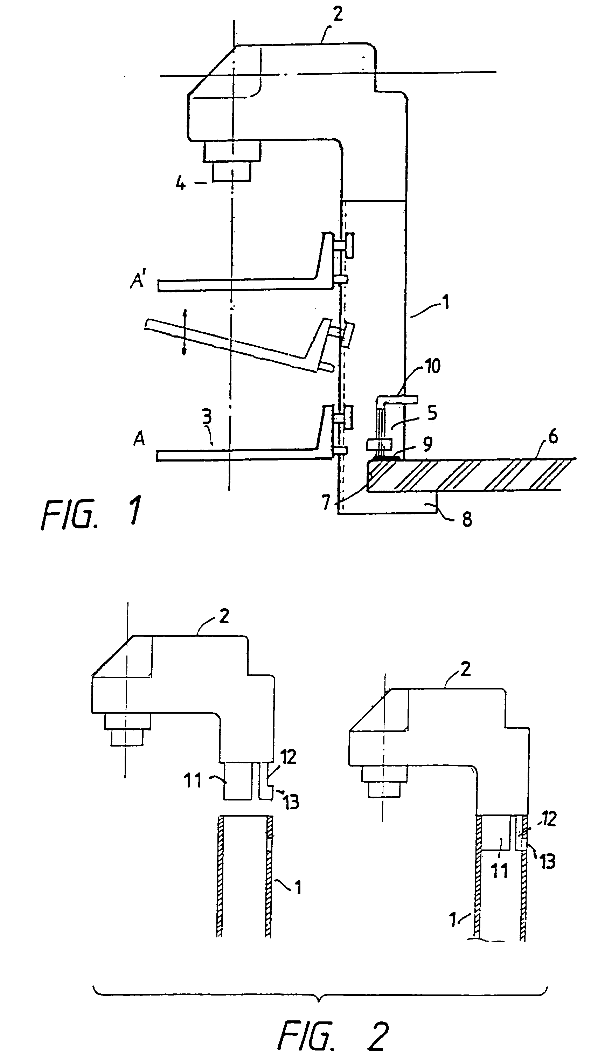

Das in Fig. 1 dargestellte erfindungsgemäße Vergrößerungsgerät umfaßt eine Säule 1, einen von der Säule getragenen Projektionskopf 2 und einen an der Säule 1 in verschiedenen Positionen A, A' ansetzbaren Projektionstisch 3. Der Projektionskopf an sich bekannter Art umfaßt eine Lichtquelle, mit der ein zu kopierendes Filmnegativ (in der Figur nicht dargestellt) durchleuchtet wird und ein einstellbares, vorzugsweise weitwinkliges Objektiv 4. Die Säule 1 hat rechteckiges Profil und ist mit einer Klemmvorrichtung 5 zu ihrer Befestigungen an einer horizontalen Montageplatte 6 ausgestattet. Dabei weist die Säule einen breiten Einschnitt 7 zur Aufnahme der Montageplatte auf, die zwischen einem Sockel 8 der Säule und einer mit einer Blockierschraube 10 versehenen Klemmbacke 9 eingespannt ist.

Wie aus Fig. 2 hervorgeht, hat der Projektionskopf 2 im rückwärtigen Teil einen Hals 11, der formschlüssig in den Hohlteil der Säule paßt. Der Hals 11 hat eine elastische Zunge 12 mit einer vorspringenden Rippe 13, die den Projektionskopf in seiner Arbeitsstellung auf der Säule fixiert. Wird die Zunge 12 durch leichten Druck auf die Rippe 13 von ihrer Raste an der Säulenflanke gelöst, ist der Hals 11 frei und der Projektionskopf selbst von der Säule abnehmbar.

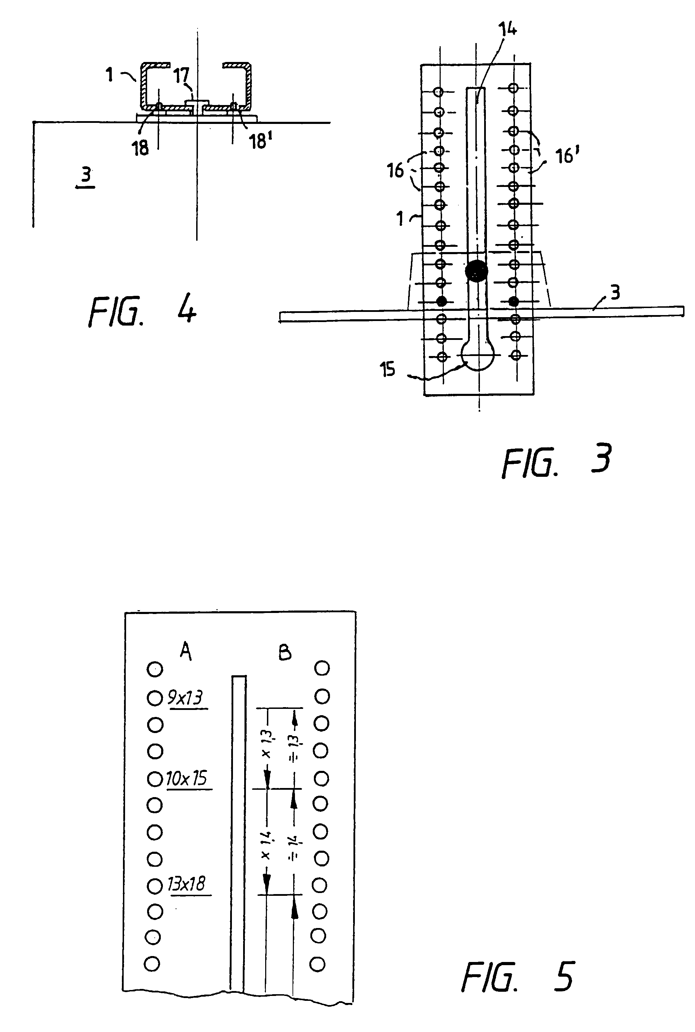

Die Figuren 3 und 4 zeigen die Art der Befestigung des Projektionstisches 3 an der Säule 2 in verschiedenen Positionen entsprechend einem gewünschten Vergrößerungsverhältnis. Die Stirnseite der Säule hat in der Mitte einen Längsschlitz 14, der am unteren Ende in eine Erweiterung 15 ausläuft, und zu beiden Seiten des Schlitzes 14 je eine Reihe Löcher 16, 16'. Der Projektionstisch weist an einem rückseitigen Flansch in der Mitte einen Bolzen mit großem Kopf 17 auf und zu beiden Seiten des Bolzens 17, höhenversetzt, je einen Bolzen ohne Kopf 18, 18', die in die Löcher 16, 16' der Säule passen. Wird also der Kopf des Bolzens 17 in die Erweiterung 15 des Säulenschlitzes 14 eingeführt und bleibt der Projektionstisch leicht nach oben geneigt, so daß die Bolzen ohne Kopf 18, 18' nicht in die Löcher 16, 16' eingreifen (siehe Fig. 1), kann der Tisch längs der Säule in eine gewünschte Höhenstellung geschoben werden, wobei der Bolzen 17 dem Längsschlitz 14 entlangläuft. Bringt man den Tisch in der gewünschten Höhenstellung in die horizontale Lage, greifen die Bolzen ohne Kopf 18, 18' in die der erreichten Höhenstellung entsprechenden Löcher 16, 16' ein und der Projektionstisch bleibt in jener Stellung an der Säule fixiert. Im umgekehrten Vorgang ist der Projektionstisch von der Säule abnehmbar.

Jeder Position des Projektionstisches gemäß der Anordnung der Löcher 16, 16' entspricht ein definierter Abstand zwischen Projektionskopf und Projektionstisch und damit ein definiertes Vergrößerungsverhältnis zwischen Filmvorlage und Abzug. So sind beispielsweise ausgehend von einem Filmformat 24x36 mm die Standardbildformate 9x13 cm, 10x15 cm, 13x18 cm u.s.w. jeweils einer fixen Position des Projektionstisches bzw. einem bestimmten Loch der Lochreihe 16, 16' zuordenbar.

Fig. 5 zeigt ein Teilstück der Säule 1 mit der daran angebrachten Beschriftung. Seitlich des mittigen Längsschlitzes 14 ist eine erste Skala (A) aufgetragen, die das Standardformat, das einem Loch der Lochreihe 16, 16' zugeordnet ist, angibt. Eine zweite Skala (B) auf der anderen Seite des Schlitzes gibt den Verlängerungsfaktor (Verkürzungsfaktor) für die Belichtungszeit beim Übergang von einem Standardformat zu einem anderen an. Wurde beispielsweise ein Bildformat 9x13 cm mit einer bestimmten Belichtungszeit belichtet, ist diese Belichtungszeit beim Übergang zum größeren Format 10x25 cm (entsprechend der Pfeilrichtung) mit dem Faktor 1,3 zu multiplizieren. Umgekehrt ist beim Übergang vom Format 10x15 cm zum kleineren Format 9x13 cm die für das Format 10x15 cm geltende Belichtungszeit durch den Faktor 1,3 zu dividieren.

Bei fotografischen Kopier- oder Vergrößerungsarbeiten mit einem Vergrößerungsgerät werden bekanntlich Zusatzvorrichtungen wie Vergrößerungsrahmen, Maskenrahmen, Kontaktkopierrahmen, Tricktische und ähnliches verwendet. Derlei Vorrichtungen sind allgemein als Dunkelkammerzubehör bekannt und werden bei Bedarf fallweise in Verbindung mit herkömmlichen Vergrößerungsgeräten eingesetzt.

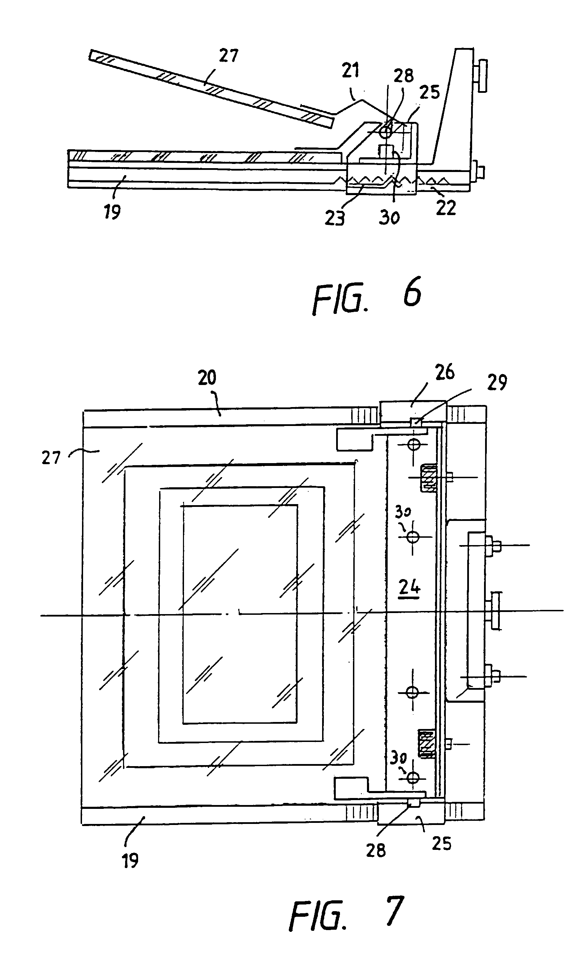

Beim erfindungsgemäßen Vergrößerungsgerät ist der Projektionstisch so ausgebildet, daß die Funktion eines Vergrößerungsrahmens, Maskenrahmens, Kontaktkopierrahmens oder dergleichen in den Projektionstisch integrierbar ist. In den Figuren 6 und 7 ist dies am Beispiel der Bestückung des Projektionstisches mit Teilen eines Kontaktkopierrahmens gezeigt.

Der Projektionstisch weist an zwei einander gegenüberliegenden Randseiten Führungsleisten 19 und 20 auf, in welche zwei durch eine Halteschiene 24 miteinander verbundene Führungswinkel 25 und 26 einführbar sind. Die Führungswinkel zusammen mit der Halteschiene sind längs der Führungsleisten 19, 20 verschiebbar, wobei eine Rastfeder 23 der Führungswinkel in eine Kerbung 22 der Führungsleisten eingreift und eine gewünschte Stellung der Führungswinkel längs der Führungsleisten fixiert. Eine Glasplatte 27 ist an Haltebügeln 21 befestigt, die mit Zapfen 28, 29 an beiden Enden in Kehlen der Führungswinkel 25, 26 liegen, so daß die Glasplatte 27 am Projektionstisch klappbar befestigt ist. Auf der Halteschiene 24 ist eine Passerleiste mit einer Reihe Passerstiften 30 angebracht, die zum Positionieren der Filmvorlage beim Kontaktkopieren dienen.

Es ist ohne weiteres verständlich, daß die Führungswinkel 25, 26 zusammen mit der Halteschiene 24 auch als Halterung für Maskenrahmen oder Rahmen für Probestreifenbelichtung und dergleichen geeignet sind. Weiters kann beispielsweise ein sogenannter Tricktisch zusätzlich zum Projektionstisch in gewünschten Positionen an der Säule angesetzt werden, sofern er mit Verbindungselementen ähnlich jenen des Projektionstisches ausgestattet ist.

## Patentansprüche

1. Fotografisches Vergrößerungsgerät mit einem Projektionskopf (2), einem Projektionstisch (3) und einer den Projektionskopf mit dem Projektionstisch verbindenden Säule (1), wobei die Säule (1) geeignete Mittel (5) zu ihrer lösbaren Befestigung an einem ortsfesten Träger aufweist, der Projektionskopf (2) in fester Position an einem Säulenende abnehmbar befestigt ist, und der Projektionstisch (3) an der Säule in einer diskreten Anzahl vorgegebener Positionen in unterschiedlichem Abstand vom Projektionskopf anbringbar ist, dadurch gekennzeichnet, daß die Befestigungsmittel (5), eine Klemmvorrichtung (5) für die Schnellfixierung an einer Montageplatte (6) aufweisen, und daß der Projektionskopf (2) einen mit dem Säulenende formschlüssigen Hals (11) aufweist und durch Ineinanderfügen der formschlüssigen Teile mit der Säule starr verbindbar ist.

2. Vergrößerungsgerät nach Anspruch 1, dadurch gekennzeichnet, daß die Säule (1) und der Projektionstisch (3) zueinander komplementäre Anschlußelemente (14, 15, 16, 17, 18) zur Befestigung des Projektionstisches in unterschiedlichen Positionen längs der Säule aufweisen.

3. Vergrößerungsgerät nach Anspruch 2, dadurch gekennzeichnet, daß die Anschlußelemente (14, 15, 16) der Säule (1) einen mittigen Längsschlitz (14) und eine Lochreihe (16, 16') zu beiden Seiten des Schlitzes entsprechend der Anzahl vorgegebener Positionen des Projektionstisches längs der Säule umfassen.

4. Vergrößerungsgerät nach Anspruch 3, dadurch gekennzeichnet, daß die Säule (1) eine Formatskala (A) aufweist, die einzelnen Löchern (16, 16') der Lochreihen ein Bildformat zuordnet, wobei an einer weiteren Skala (B) der Verlängerungsfaktor (Verkürzungsfaktor) für die Belichtungszeit beim Übergang von einem Format zu einem anderen ablesbar ist.

5. Vergrößerungsgerät nach einem der vorhergehenden Ansprüche 1-4, dadurch gekennzeichnet, daß der Projektionstisch (3) mit einer Halterung (21) für austauschbare Zusatzvorrichtungen wie Vergrößerungsrahmen, Maskenrahmen und ähnliches ausgestattet ist.

6. Vergrößerungsgerät nach Anspruch 5, dadurch gekennzeichntet, daß die Halterung (21) einen Haltebügel (21) umfaßt, der an seitlichen Führungen (19, 20) des Projektionstisches (3) auf diesen aufsetzbar ist.

## Claims

1. Photographic enlarger having a projection head (2), a projection stage (3) and a column (1) connecting the projection head to the projection stage, the column (1) having suitable means (5) for releasably fastening it to a fixed support, the projection head (2) being removably fastened in a fixed position to one end of the column, the projection stage (3) being attachable to the column at a discrete number of predetermined positions at different distances from the projection head, characterised in that the fastening means (5) comprise a clamping device (5) for quick fastening to a mounting plate (6), and the projection head (2) has a neck (11) which interlocks with the end of the column, and can be rigidly connected to the column by fitting the interlocking parts one into another.

2. Enlarger according to claim 1, characterised in that the column (1) and the projection stage (3) have mutually complementary connection elements (14, 15, 16, 17, 18) for fastening the projection stage at different positions along the column.

3. Enlarger according to claim 2, characterised in that the connection elements (14, 15, 16) of the column (1) comprise a central longitudinal slot (14) and a row of holes (16, 16'), on both sides of the slot, corresponding to the number of predetermined positions of the projection stage along the column.

4. Enlarger according to claim 3, characterised in that the column (1) has a format scale (A) which assigns a picture format to individual holes (16, 16') of the rows of holes, the lengthening factor (shortening factor) for the exposure time when changing from one format to another being readable from a further scale (B).

5. Enlarger according to any one of the preceding claims 1 to 4, characterised in that the projection stage (3) is equipped with a mounting device (21) for interchangeable accessories such as enlarging frames, masking frames and the like.

6. Enlarger according to claim 5, characterised in that the mounting device (21) comprises a mounting bracket (21) which can be attached to the projection stage (3) at lateral guides (19, 20) thereof.

## Revendications

1. Agrandisseur photographique pourvu d'une tête de projection (2), d'une table de projection (3) et d'une colonne (1) reliant la tête de projection à la table de projection, la colonne (1) présentant des moyens (5) adaptés à sa fixation amovible sur un support à demeure, la tête de projection (2) étant fixée rigidement et de manière amovible à une extrémité de la colonne, et la table de projection (3) étant réglable sur la colonne dans un nombre discret de positions prédéterminées à des distances différentes de la tête de projection, caractérisé en ce que les moyens de fixation (5) présentent un dispositif de serrage (5) en vue de sa fixation rapide sur une plaque de montage (6), et en ce que la tête de projection (2) présente un col (11) formant un engagement positif avec l'extrémité de la colonne et peut être reliée rigidement à la colonne par emboîtement des parties formant engagement positif.

2. Agrandisseur selon la revendication 1, caractérisé en ce que la colonne (1) et la table de projection (3) présentent des éléments de raccordement (14, 15, 16, 17, 18) complémentaires les uns des autres en vue de la fixation de la table de projection dans différentes positions le long de la colonne.

3. Agrandisseur selon la revendication 2, caractérisé en ce que les éléments de raccordement (14, 15, 16) de la colonne (1) présentent une fente allongée centrale (14) et des rangées de trous (16, 16') de part et d'autre de la fente qui correspondent au nombre de positions prédéterminées de la table de projection le long de la colonne.

4. Agrandisseur selon la revendication 3, caractérisé en ce que la colonne (1) présente une échelle de formats (A) qui associe aux différents trous (16, 16') des rangées de trous un format d'image, une autre échelle (B) permettant de lire le facteur de prolongation (facteur de raccourcissenent) du temps d'exposition lors du passage d'un format à un autre.

5. Agrandisseur selon l'une des revendications 1 à 4, caractérisé en ce que la table de projection (3) est pourvue d'une fixation (21) destinée à des dispositifs supplémentaires interchangeables tels que des cadres d'agrandissement, des cadres à masque et similaires.

6. Agrandisseur selon la revendication 5, caractérisé en ce que la fixation (21) comprend un étrier de maintien (21), qui peut être posé sur la table de projection (3) sur des guides latéraux (19, 20) de celle-ci.
